# FASCICULE DE BREVET EUROPEEN

(11) **EP 1 063 744 B1**
(45) Date de publication et mention de la délivrance du brevet: **11.08.2004**
(21) Numéro de dépôt: 00401697.8
(22) Date de dépôt: 15.06.2000
(51) Int. Cl.: H01S 3/30, H01S 3/067, G02B 6/34

(54) **Amplificateur Raman à bandes multiples**
Multiband-Ramanverstärker
Multiple band Raman amplifier

(30) Priorité: 21.06.1999 FR 9907814
(43) Date de publication de la demande: 27.12.2000
(73) Titulaire: ALCATEL, 75008 Paris (FR)
(72) Inventeur: Blondel, Jean-Pierre, 78530 Buc (FR); Brandon, Eric, 92340 Bourg La Reine (FR); Le Roux, Patrice, 91310 Montlhery (FR); Toullier, Denis, 45400 Fleury Les Aubrais (FR)
(74) Mandataire: Lamoureux, Bernard

(56) Documents cités:
- US-A- 4 805 977
- US-A- 5 608 825
- US-A- 5 748 350
- MASUDA H ET AL: "WIDE-BAND AND GAIN-FLATTENED HYBRID FIBER AMPLIFIER CONSISTING OF AN EDFA AND A MULTIWAVELENGTH PUMPED RAMAN AMPLIFIER" IEEE PHOTONICS TECHNOLOGY LETTERS,US,IEEE INC. NEW YORK, vol. 11, no. 6, juin 1999 (1999-06), pages 647-649, XP000835425 ISSN: 1041-1135

## Description

La présente invention concerne le domaine des transmissions par fibres optiques, et notamment les systèmes de transmission sans répéteurs. Elle s'applique notamment aux systèmes de transmission à fibre optique, utilisant un multiplexage de longueur d'onde (en anglais "wavelength division multiplexing ou WDM).

Une des solutions connues pour la transmission de signaux dans des fibres optiques consiste à disposer à intervalles réguliers le long du système de transmission des amplificateurs optiques, et notamment des amplificateurs à fibre optique dopée à l'erbium. Une telle solution est par exemple décrite dans Bergano, "Long haul WDM transmission using optimum channel modulation : 32 x 5 Gbit/s 9300 km démonstration", OFC'97 post deadline paper 16. Les distances de transmission dans un tel système sont limitées par le rapport signal sur bruit, et notamment par la présence de bruit d'amplification spontanée (ASE, acronyme de l'anglais "amplification spontaneous noise") généré dans les amplificateurs.

Il a aussi été proposé dans un article Morten Nissov et autres, "100 Gb/s (10x10 Gb/s) WDM transmission over 7200 km using distribution Raman amplification", OFC'97, post deadline paper, d'utiliser dans un système de transmission uniquement une amplification distribuée par effet Raman stimulé (SRS, acronyme de l'anglais "Stimulated Raman Scattering") pour l'amplification à intervalles réguliers du signal. Cette solution permet une amélioration du rapport signal sur bruit d'environ 2 dB par rapport à une solution comparable utilisant uniquement des pompes discrètes. Une description de l'effet Raman est donnée dans l'ouvrage de G.P. Agrawal, "Nonlinear Fibre Optics", Academic Press, 1980.

P.B. Hansen et autres, "Unrepeated WDM Transmission Experiment with 8 Channels of 10 Gb/s over 352 km", IEEE Photonics Technology Letters, vol. 8 no. 8, August 1996, pages 1082-1084 décrit un système de transmission sans répéteurs, avec un pompage à distance de sections de fibres dopées à l'erbium. Ces sections de fibres sont disposées à distance de l'émetteur et du récepteur dans le système de transmission, et sont pompées par des sources respectivement situées dans le récepteur et dans l'émetteur.

Le brevet français FR-A-2 787 953 portant le titre "Amplification quasi-distribuée dans un système de transmission à fibre optique" propose un répéteur pour un système de transmission à fibre optique, qui comprend un amplificateur discret, par exemple un amplificateur constitué d'une fibre dopée à l'erbium, avec au moins une pompe pour produire une amplification par effet Raman stimulé dans la fibre de ligne.

Un des problèmes rencontrés dans l'amplification par effet Raman est celui de la longueur d'onde des pompes utilisées; ce problème se pose notamment pour l'amplification par effet Raman de signaux multiplexés en longueur d'onde, qui s'étendent sur une plage de longueurs d'onde importante. Ce problème est mentionné dans S.V. Chernikov et autres, "Broadband Raman amplifiers in the spectral range of 1480-1620 nm", OFC'99, WG6, pages 117-119. La solution proposée dans ce document consiste à disposer en cascade des amplificateurs présentant des longueurs d'onde de pompage différentes, ou encore de coupler dans un amplificateur unique moyens de pompage optique à longueurs d'ondes multiples.

Ce document ne mentionne pas de solution pour permettre de coupler dans un amplificateur de tels moyens de pompage optique à longueurs d'ondes multiples.

L'invention propose une solution à ce problème ; cette solution est simple et efficace et peut être mise en oeuvre avec un nombre limité de composants classiques en optronique. Elle assure une amplification continue, sans interruption dans la bande utile.

Plus précisément, l'invention propose , un dispositif pour injecter dans une fibre optique des signaux provenant de plusieurs sources à des longueurs d'ondes distinctes, comprenant :
- une première source de signaux ;
- un premier circulateur avec une première entrée reliée à la première source ;
- une deuxième source de signaux ;
- un deuxième circulateur avec une première entrée reliée à la deuxième source de signaux à travers des moyens de réflexion des signaux provenant de la première source, une troisième entrée reliée à une deuxième entrée du premier circulateur, et une deuxième entrée fournissant les signaux provenant des première et deuxième sources de signaux.

Dans un mode de réalisation, le dispositif comprend en outre :
- une troisième source de signaux ;
- un troisième circulateur avec une première entrée reliée à la troisième source de signaux à travers des moyens de réflexion des signaux provenant des première et deuxième sources, une troisième entrée reliée à la deuxième entrée du deuxième circulateur, et une deuxième entrée fournissant les signaux provenant des première, deuxième et troisième sources de signaux.

Dans ce cas, le dispositif peut encore comprendre en outre :
- une n-ième source de signaux ;
- un n-ième circulateur, avec une première entrée reliée à la n-ième source de signaux à travers des moyens de réflexion des signaux provenant des sources de rang inférieur à n, une troisième entrée reliée à la deuxième entrée du circulateur de rang n-1, et une deuxième entrée fournissant les signaux provenant des sources de signaux de rang 1 à n,
avec n un entier variant de 4 à M, M étant le nombre total de sources injectées.

Avantageusement, chacune des sources de signaux comprend un moyen de pompage optique.

Dans un mode de réalisation, les moyens de réflexion comprennent des réseaux de Bragg.

L'invention propose encore un amplificateur Raman à bandes multiples comprenant un tel dispositif pour l'injection des signaux de pompe, et une fibre d'amplification reliée à la deuxième sortie du circulateur de rang le plus élevé.

De préférence, la fibre d'amplification est une fibre de ligne.

Avantageusement, l'amplification s'effectue dans la fibre d'amplification par diffusion Raman stimulée.

L'invention propose enfin un système de transmission à fibre optique comprenant un tel amplificateur.

D'autres caractéristiques et avantages de l'invention apparaîtront à la lecture de la description qui suit de modes de réalisation de l'invention, donnée à titre d'exemple et en référence aux dessins annexés, qui montrent
- figure 1, une représentation schématique d'un premier mode de réalisation d'un amplificateur selon l'invention ;
- figure 2, une représentation schématique d'un deuxième mode de réalisation d'un amplificateur selon l'invention.

L'invention propose, pour coupler plusieurs pompes dans une fibre, d'utiliser pour injecter chacune des pompes des circulateurs montés en cascade. Entre chaque pompe et son circulateur est prévu un réflecteur réfléchissant les pompes déjà injectées. L'invention permet de la sorte d'injecter simplement dans une fibre un ensemble de pompes, à différentes longueurs d'onde, sans atténuer significativement lors de l'injection d'une pompe les signaux provenant des pompes précédentes.

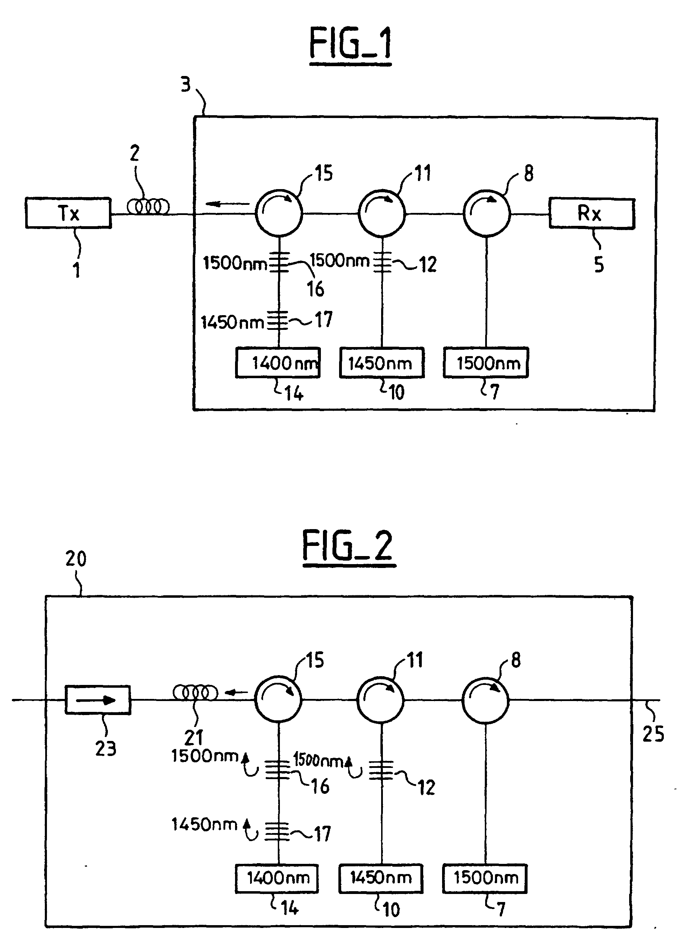

La figure 1 montre une représentation schématique d'un premier mode de réalisation d'un amplificateur selon l'invention; le mode de réalisation de la figure 1 est appliqué à un système de transmission par fibre optique sans répéteurs.

Apparaît à la figure 1 émetteur TX 1, la fibre de ligne 2, et le terminal de réception 3. Celui-ci comprend un récepteur 5; ces éléments sont connus en soi et ne sont pas décrits plus en détail, leur fonctionnement n'étant pas nécessaire à l'intelligence de l'invention. Est prévue en outre une pré-amplification distribuée par diffusion Raman stimulée, qui utilise trois pompes contra-propagatives, à 1450, 1500 et 1550 nm. La première pompe 7 à 1500 nm est injectée dans la fibre de ligne par un premier circulateur 8, adjacent au récepteur 5 dans le terminal 3. Le circulateur présente de façon connue en soi trois entrées; la première entrée reçoit le signal de la pompe; la deuxième entrée reçoit les signaux provenant de la fibre de ligne, et la troisième entrée est reliée au récepteur. De la sorte, les signaux de la pompe arrivant sur la première entrée sont transmis vers la deuxième entrée, et sont donc envoyés dans la fibre de ligne dans un sens de propagation opposé à celui du signal; les signaux provenant de la fibre de ligne et arrivant sur le circulateur par sa deuxième entrée sont transmis vers la troisième entrée et vers le récepteur. Aucun signal ne provient du récepteur sur la troisième entrée du circulateur.

La deuxième pompe 10 à 1450 nm est injectée dans la fibre de ligne par un deuxième circulateur 11, adjacent au premier circulateur. Entre le deuxième circulateur et la deuxième pompe est prévu un réflecteur 12, par exemple un réseau de Bragg, qui réfléchit les signaux de la première pompe. Le deuxième circulateur est aussi un circulateur à trois entrées; la première entrée reçoit le signal de la deuxième pompe; la deuxième entrée reçoit les signaux provenant de la fibre de ligne, et la troisième entrée est reliée à la deuxième entrée du premier circulateur. De la sorte, les signaux de la deuxième pompe arrivant sur la première entrée sont transmis vers la deuxième entrée, et sont donc envoyés dans la fibre de ligne dans un sens de propagation opposé à celui du signal; les signaux provenant de la fibre de ligne et arrivant sur le circulateur par sa deuxième entrée sont transmis vers la troisième entrée et vers le récepteur via le premier circulateur. Le signal de la première pompe provenant du premier circulateur entre dans le deuxième circulateur sur sa troisième entrée; il est transmis vers la première entrée, est réfléchi par le réflecteur, et entre à nouveau dans le circulateur par la première entrée; il est enfin transmis vers la deuxième entrée du deuxième circulateur, et donc vers la fibre de ligne. On trouve donc en amont du deuxième circulateur dans la fibre de ligne les signaux des première et deuxième pompes.

La troisième pompe 14 à 1400 nm est injectée de façon similaire dans la fibre de ligne, par un troisième circulateur 15, adjacent au deuxième circulateur. Entre le troisième circulateur et la troisième pompe sont prévus deux réflecteurs 16 et 17, par exemple des réseaux de Bragg, qui réfléchissent les signaux de la première pompe et de la deuxième pompe. Le troisième circulateur est aussi un circulateur à trois entrées; la première entrée reçoit le signal de la troisième pompe; la deuxième entrée reçoit les signaux provenant de la fibre de ligne, et la troisième entrée est reliée à la deuxième entrée du deuxième circulateur. De la sorte, les signaux de la troisième pompe arrivant sur la première entrée sont transmis vers la deuxième entrée, et sont donc envoyés dans la fibre de ligne dans un sens de propagation opposé à celui du signal; les signaux provenant de la fibre de ligne et arrivant sur le circulateur par sa deuxième entrée sont transmis vers la troisième entrée et vers le récepteur via le premier circulateur et le deuxième circulateur. Les signaux de la première pompe et de la deuxième pompe provenant du deuxième circulateur entrent dans le troisième circulateur sur sa troisième entrée; ils sont transmis vers la première entrée, sont réfléchis par les deux réflecteurs, et entre à nouveau dans le troisième circulateur par la première entrée; il est enfin transmis vers la deuxième entrée du troisième circulateur, et donc vers la fibre de ligne. On trouve donc en amont du troisième circulateur dans la fibre de ligne les signaux des première, deuxième et troisième pompes.

L'invention permet d'obtenir en amont du terminal 3 l'ensemble des signaux des trois pompes, dans la fibre de ligne, dans la direction indiquée par la flèche sur la figure, i. e. dans une direction contraire à la direction de propagation des signaux; il apparaît clairement du fonctionnement du montage de la figure 1 que l'injection des signaux des deuxième et troisième pompes dans la fibre de ligne par les deuxième et troisième circulateurs n'atténue en aucune façon les signaux provenant des pompes précédentes. On obtient grâce à l'invention un signal de pompe à bandes multiples, qui permet un pompage sur une large plage de longueurs d'onde, sans pertes d'insertion des différentes pompes. On obtient de la sorte une pré-amplification par effet Raman dans la fibre de ligne, en amont du terminal 3.

Pour ce qui est des signaux arrivant dans le récepteur, ils traversent successivement les troisième, deuxième et premier circulateurs, avant d'arriver au récepteur. Du fait du rendement des circulateurs, les pertes sont minimes; on peut typiquement obtenir des pertes d'insertion des circulateurs qui sont inférieures à environ 1 dB.

Dans le mode de réalisation de la figure 1, on peut utiliser des pompes de nature quelconque, et par exemple des pompes à semi-conducteurs; on peut utiliser comme réflecteurs des réseaux de Bragg, qui présentent l'avantage d'être transparent pour les signaux provenant directement des pompes. D'autres réflecteurs peuvent aussi être utilisés.

La figure 2 montre une représentation schématique d'un deuxième mode de réalisation d'un amplificateur selon l'invention. Dans le mode de réalisation de la figure 2, l'amplificateur est un amplificateur discret 20. On retrouve comme dans le montage de la figure 1 la première pompe 7, le premier circulateur 8, la deuxième pompe 10, le deuxième circulateur 11, le réflecteur 12, la troisième pompe 14, le troisième circulateur 15, et les deux réflecteurs 16 et 17. Ces éléments sont disposés et fonctionnent comme les éléments correspondants de la figure 1, et ne sont pas décrits à nouveau.

Une fibre d'amplification 21 est reliée à la deuxième sortie du troisième circulateur; on peut par exemple utiliser une fibre à faible aire efficace, de sorte à améliorer le rendement de l'amplification par effet Raman. A l'autre extrémité de la fibre 21 est prévu un isolateur 23, empêchant la propagation ultérieure des signaux de pompage vers la fibre de ligne. L'isolateur empêche en outre les oscillations possibles, du fait du gain dans l'amplificateur discret et des réflexions à l'extérieur de celui-ci. L'entrée de l'isolateur constitue l'entrée de l'amplificateur 20; on pourrait bien entendu prévoir encore des filtres ou d'autres composants sans rapport avec l'invention.

Du côté de la sortie de l'amplificateur, la fibre de ligne 25 est reliée à la troisième entrée du premier circulateur.

Le montage de la figure 2 constitue donc un amplificateur discret par diffusion Raman stimulée, avec une amplification sur une large bande; comme dans le cas de la figure 1, le montage de la figure 2 permet d'injecter dans la fibre d'amplification plusieurs pompes, dans que l'injection des nouvelles pompes n'atténue significativement les signaux des pompes déjà injectées.

Bien entendu, la présente invention n'est pas limitée aux exemples et modes de réalisation décrits et représentés, mais elle est susceptible de nombreuses variantes accessibles à l'homme de l'art. Ainsi, il est clair que l'invention n'est pas limitée l'injection de trois pompes, et qu'elle pourrait être utilisée pour l'injection de deux pompes, ou de quatre pompes ou plus. Dans un tel cas, pour injecter M pompes, l'invention propose d'utiliser, outre les éléments déjà décrits aux figures 1 et 2, pour la n-ième pompe un n-ième circulateur, avec une première entrée reliée à la n-ième pompe à travers des moyens de réflexion des signaux provenant des pompes de rang inférieur à n, une troisième entrée reliée à la deuxième entrée du circulateur de rang n-1, et une deuxième entrée fournissant les signaux provenant des pompes de rang 1 à n; n est alors un entier variant de 4 à M, M étant le nombre total de pompes injectées.

Dans les modes de réalisation des figures, on a appliqué l'invention à l'injection de pompes pour l'amplification par diffusion Roman stimulée; l'invention pourrait être appliquée à d'autres usages, dans lesquels on souhaite injecter plusieurs signaux dans des bandes distinctes dans une fibre, sans que l'injection de nouveaux signaux n'entraîne d'atténuation des signaux précédemment injectés. Dans cette optique, les pompes ne sont que les sources de signaux particulières.

Dans les modes de réalisation des figures sont mentionnées des sources de signaux à des longueurs d'ondes différentes. En effet, le réseau de Bragg utilisé dans les exemples comme moyens de réflexion réfléchit les signaux provenant des pompes précédentes, mais réfléchirait aussi les signaux de la pompe voisine s'ils présentaient la même longueur d'onde que les pompes précédentes. Si l'on utilisait d'autres moyens de réflexion semi-réfléchissants, on pourrait injecter la même longueur d'onde à partir de plusieurs sources.

## Revendications

1. Un dispositif pour injecter dans une fibre des signaux optiques provenant de plusieurs sources à des longueurs d'ondes distinctes, comprenant :
- une première source de signaux (7) ;
- un premier circulateur (8) avec une première entrée reliée à la première source de signaux optiques ;
- une deuxième source de signaux (10) ;
- un deuxième circulateur (11) avec une première entrée reliée à la deuxième source de signaux (10) à travers des moyens de réflexion (12) des signaux provenant de la première source (7), une troisième entrée reliée à une deuxième entrée du premier circulateur, et une deuxième entrée fournissant les signaux provenant des première et deuxième sources de signaux.

2. Le dispositif selon la revendication 1, **caractérisé en ce qu'**il comprend en outre :
- une troisième source de signaux (14) ;
- un troisième circulateur (15) avec une première entrée reliée à la troisième source de signaux (14) à travers des moyens de réflexion (16, 17) des signaux provenant des première (7) et deuxième (10) sources, une troisième entrée reliée à la deuxième entrée du deuxième circulateur, et une deuxième entrée fournissant les signaux provenant des première, deuxième et troisième sources de signaux.

3. Le dispositif selon la revendication 2, **caractérisé en ce qu'**il comprend en outre :
- une n-ième source de signaux ;
- un n-ième circulateur, avec une première entrée reliée à la n-ième source de signaux à travers des moyens de réflexion des signaux provenant des sources de rang inférieur à n, une troisième entrée reliée à la deuxième entrée du circulateur de rang n-1, et une deuxième entrée fournissant les signaux provenant des sources de signaux de rang 1 à n,
avec n un entier variant de 4 à M, M étant le nombre total de sources injectées.

4. Le dispositif selon la revendication 1, 2 ou 3, **caractérisé en ce que** chacune des sources de signaux comprend un moyen de pompage optique.

5. Le dispositif selon l'une des revendications 1 à 4, **caractérisé en ce que** les moyens de réflexion comprennent des réseaux de Bragg.

6. Un amplificateur Raman à bandes multiples comprenant un dispositif selon l'une des revendications 1 à 5 pour l'injection des signaux de pompe, et une fibre d'amplification reliée à la deuxième sortie du circulateur de rang le plus élevé.

7. L'amplificateur selon la revendication 6, **caractérisé en ce que** la fibre d'amplification (2) est une fibre de ligne.

8. L'amplificateur selon la revendication 6 ou 7, **caractérisé en ce que** l'amplification s'effectue dans la fibre d'amplification par diffusion Raman stimulée.

9. Un système de transmission à fibre optique comprenant un amplificateur selon la revendication 6, 7 ou 9.

## Claims

1. A system for injecting into a fiber optical signals from multiple sources at different wavelengths, the system comprising:
- a first signal source (7),
- a first circulator (8) with a first input connected to the first optical-signal source,
- a second signal source (10), and
- a second circulator (11) with a first input connected to the second signal source (10) via reflector means (12) for reflecting signals from the first source (7), a second input supplying the signals from the first and second signal sources, and a third input connected to a second input of the first circulator.

2. A system according to claim 1, **characterized in that** it further includes:
- a third signal source (14), and
- a third circulator (15) with a first input connected to the third signal source (14) via reflector means (16, 17) for reflecting signals from the first source (7) and the second source (10), a second input supplying the signals from the first, second and third signal sources, and a third input connected to the second input of the second circulator.

3. A system according to claim 2, **characterized in that** it further includes:
- an nth signal source,
- an nth circulator with a first input connected to the nth signal source via reflector means for reflecting signals from sources of rank less than n, where n is an integer varying from 4 to M and M is the total number of sources injected, a second input supplying the signals from the signal sources of rank 1 to n, and a third input connected to the second input of the circulator of rank n-1

4. The system claimed in claim 1 or claim 2 or claim 3, **characterized in that** each of the signal sources comprises optical pump means.

5. The system claim in any one of claims 1 to 4, **characterized in that** the reflector means comprise Bragg gratings.

6. A multiband Raman amplifier comprising a system according to any one of claims 1 to 5 for injecting pump signals and an amplifier fiber connected to the second output of the highest rank circulator.

7. An amplifier according to claim 6, **characterized in that** the amplifier fiber (2) is a line fiber.

8. An amplifier according to claim 6 or claim 7, **characterized in that** amplification is effected in the amplifier fiber by stimulated Raman scattering.

9. A fiber optic transmission system comprising an amplifier according to claim 6 or claim 7 or claim 9.

## Patentansprüche

1. Eine Vorrichtung zur Injektion von optischen Signalen in eine Faser, die aus verschiedenen Quellen mit unterschiedlichen Wellenlängen stammen, bestehend aus:
- einer ersten Signalquelle (7);
- einem ersten Zirkulator (8) mit einem ersten Eingang, der mit der optischen Signalquelle verbunden ist;
- einer zweiten Signalquelle (10);
- einem zweiten Zirkulator (11), dessen erster Eingang mit der zweiten Signalquelle (10) über Reflexionsvorrichtungen (12) für die Signale verbunden ist, die von der ersten Quelle (7) stammen, wobei ein dritter Eingang mit einem zweiten Eingang des ersten Zirkulators verbunden ist, und ein zweiter Eingang die Signale liefert, die von der ersten und zweiten Signalquelle stammen.

2. Vorrichtung gemäß Anspruch 1, **dadurch gekennzeichnet, dass** sie außerdem besteht aus:
- einer dritten Signalquelle (14);
- einem dritten Zirkulator (15) mit einem ersten Eingang, der mit der dritten Signalquelle (14) über Vorrichtungen zur Reflexion (16, 17) der Signale verbunden ist, die von der ersten (7) und zweiten (10) Quelle stammen, und einem dritten Eingang, der mit dem zweiten Eingang des zweiten Zirkulators verbunden ist, und einem zweiten Eingang, der die Signale liefert, die von der ersten, zweiten und dritten Signalquelle stammen.

3. Vorrichtung nach Anspruch 2, **dadurch gekennzeichnet, dass** sie außerdem besteht aus:
- einer n-ten Signalquelle;
- einem n-ten Zirkulator, wobei ein erster Eingang mit der n-ten Signalquelle über Vorrichtungen zur Reflexion der Signale verbunden ist, die von den Quellen im Rang unter n stammen, und einem dritten Eingang, der mit dem zweiten Eingang des Zirkulators im Rang n-1 verbunden ist, und einem zweiten Eingang, der die Signale liefert, die von den Signalquellen in Rang 1 bis n stammen, wobei n eine ganze Zahl zwischen 4 und M darstellt und M die Gesamtanzahl der injizierten Quellen ist.

4. Vorrichtung gemäß Anspruch 1, 2 oder 3, **dadurch gekennzeichnet, dass** jede Signalquelle eine optische Pumpvorrichtung beinhaltet.

5. Vorrichtung gemäß einem der Ansprüche 1 bis 4, **dadurch gekennzeichnet, dass** die Reflexionsvorrichtungen ein Bragg-Netz beinhalten.

6. Ein Multiband-Ramanverstärker, bestehend aus einer Vorrichtung gemäß einem der Ansprüche 1 bis 5 zur Injektion von Pumpsignalen und einer Verstärkungsfaser, die mit dem zweiten Ausgang des Zirkulators im höchsten Rang verbunden ist.

7. Der Verstärker gemäß Anspruch 6, **dadurch gekennzeichnet, dass** die Verstärkungsfaser (2) eine Leitungsfaser ist.

8. Der Verstärker gemäß Anspruch 6 oder 7, **dadurch gekennzeichnet, dass** die Verstärkung in der Verstärkungsfaser mittels stimulierter Raman-Streuung erfolgt.

9. Ein faseroptisches Übertragungssystem, das einen Verstärker gemäß Anspruch 6, 7 oder 9 beinhaltet.
